# FASCICULE DE BREVET EUROPEEN

(11) **EP 2 604 425 B1**
(45) Date de publication et mention de la délivrance du brevet: **15.02.2017**
(21) Numéro de dépôt: 12306542.7
(22) Date de dépôt: 07.12.2012
(51) Int. Cl.: B64D 33/02, B64C 1/40, B32B 3/08, B32B 5/28, B64C 1/00

(54) **PAROI EN MATERIAU COMPOSITE RENFORCÉE DE MANIERE A LIMITER LA PROPAGATION D'UNE CRIQUE SELON UNE DIRECTION**
VERBUNDWERKSTOFFWAND VERSTÄRKT ZUR BEGRENZUNG DER RISSAUSBREITUNG IN EINER RICHTUNG
COMPOSITE MATERIAL WALL REINFORCED FOR LIMITING CRACK PROPAGATION IN ONE DIRECTION

(30) Priorité: 13.12.2011 FR 1161514
(43) Date de publication de la demande: 19.06.2013
(73) Titulaire: Airbus Opérations SAS, 31060 Toulouse (FR)
(72) Inventeur: Porte, Alain, 31770 COLOMIERS (FR); Lalane, Jacques, 31650 SAINT ORENS DE GAMEVILLE (FR); Dida, Stéphane, 31470 FONTENILLES (FR)
(74) Mandataire: Fantin, Laurent

(56) Documents cités:
- US-A1- 2005 112 348
- US-A1- 2005 136 256

## Description

La présente invention se rapporte à une paroi en matériau composite renforcée de manière à limiter la propagation d'une crique selon une direction donnée.

Pour limiter l'impact des nuisances sonores des aéronefs, des techniques ont été développées pour réduire le bruit, notamment en disposant, au niveau de certaines parois, des panneaux ou revêtements visant à absorber une partie de l'énergie sonore, notamment en utilisant le principe des résonateurs d'Helmholtz. Ce type de panneau comprend de l'extérieur vers l'intérieur une couche poreuse acoustiquement résistive, au moins une structure alvéolaire et une paroi réflectrice ou imperméable. En variante, le panneau peut comprendre plusieurs structures alvéolaires superposées entre lesquelles sont prévues des couches poreuses acoustiquement résistives. Les cellules de la ou des structure(s) alvéolaire(s) sont dimensionnées pour assurer un traitement acoustique optimisé. Par couche, on entend une ou plusieurs couches de même nature ou non.

Selon un mode de réalisation, la structure alvéolaire se présente sous la forme d'un nid d'abeilles en matériau composite.

La paroi réflectrice peut être en matériau composite et obtenue par drapage de fibres noyées dans une matrice de résine.

La structure acoustiquement résistive est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche. Généralement, la structure acoustiquement résistive comprend au moins une couche poreuse et au moins une structure de renfort.

La couche poreuse doit permettre de rendre le traitement acoustique linéaire et de piéger les ondes acoustiques dans les cellules Helmholtz formées par la structure alvéolaire.

Selon un mode de réalisation, la couche poreuse est un tissu métallique, notamment un grillage métallique avec des fils métalliques ayant un diamètre de l'ordre de 0,1 mm.

Selon un avantage, ce tissu métallique est un excellent conducteur pour la foudre balayante.

Selon une contrainte, ce grillage métallique en contact avec les flux d'air ne doit pas générer des aspérités trop importantes si bien que le diamètre des fils est limité et inférieur à 0,1 mm voire 0,2 mm. Au-delà, les fils du grillage généreraient des aspérités rédhibitoires sur le plan aérodynamique.

Selon un point important, le grillage métallique est collé sur une partie de sa surface aux autres couches de la structure acoustiquement résistive.

La structure de renfort se présente sous la forme d'une plaque en matériau composite ou métallique dans laquelle sont ménagés des orifices de section plus ou moins importante. Selon un mode de réalisation, la structure de renfort se présente sous la forme d'une tôle avec des perforations oblongues, rondes. Selon l'art antérieur, la couche poreuse et la structure de renfort sont réalisées indépendamment l'une de l'autre et sont simplement reliées par collage de manière à être plaquées l'une contre l'autre.

Les panneaux pour le traitement acoustique sont de plus en plus performants sur le plan acoustique. Ils sont extrêmement résistants, pour certaines sollicitations comme par exemple les efforts de compression selon la direction transversale (direction perpendiculaire aux couches), de traction selon une direction longitudinale (direction contenue dans le plan des couches). Toutefois, ces panneaux ne sont pas résilients et peuvent casser en cas de choc. Enfin, à partir d'une zone d'endommagement localisée, des criques peuvent se propager selon une trajectoire non contrôlée.

Aussi, dans les conditions normales d'utilisation, les panneaux pour le traitement acoustique donnent satisfaction. Cependant, en cas d'incident, si la structure de l'aéronef à laquelle est relié le panneau acoustique tend à se déformer, les contraintes supportées par le panneau peuvent provoquer l'apparition de fissures ou criques qui, si les chargements sont suffisamment sévères, peuvent se propager entrainant ainsi la dislocation du panneau en plusieurs parties. Si dans cette situation, le traitement acoustique devient secondaire, il est important que la structure de l'aéronef soit la moins endommagée possible afin de lui permettre d'atteindre sa destination finale.

Cette problématique peut être généralisée à toutes les parois en matériau composite d'un aéronef comme par exemple celles formant le fuselage. Comme pour le panneau pour le traitement acoustique, il est important de limiter la propagation d'une crique selon une direction donnée afin que la structure de l'aéronef soit la moins endommagée possible et puisse permettre à l'aéronef de poursuivre sa mission.

Selon une problématique plus précise, les pièces en matériau composite d'un aéronef ayant des sections dans un plan transversal avec un pourtour fermé, comme par exemple un tronçon d'un fuselage, un panneau pour le traitement acoustique d'une entrée d'air, un tronçon d'une aile, ont une structure avec des renforts orbitaux qui limitent la propagation des criques selon une direction perpendiculaire au plan transversal. Cependant, ces pièces en matériau composite ont une faible résistance pour limiter les risques de propagation d'une crique dans un plan transversal qui peut alors s'étendre sur toute la circonférence.

Le document US2005/0112348 propose une solution pour renforcer un panneau qui consiste à apposer sur la surface d'un panneau des bandes qui viennent en saillie. Ces bandes peuvent comprendre des fibres de renfort non-métalliques. Ce panneau ne peut pas être utilisé pour des applications où il est en contact avec des flux aérodynamique en raison des éléments en saillie. De plus, les fibres non métalliques ne limitent pas la propagation des criques car elles sont aussi « cassantes » que les fibres des couches composant le panneau.

Aussi, la présente invention vise à remédier aux inconvénients de l'art antérieur en proposant une paroi en matériau composite renforcée de manière à limiter la propagation d'une crique selon une direction donnée sans toutefois trop impacter la masse embarquée de l'aéronef.

A cet effet, l'invention a pour objet une paroi en matériau composite comprenant au moins deux couches de fibres noyées dans une matrice en résine, une crique étant susceptible de se propager dans ladite paroi selon une direction de propagation, caractérisée en ce qu'elle comprend au moins un renfort métallique, ayant des propriétés ductiles de manière à pouvoir se déformer sans se rompre, longiligne, orienté selon une direction sécante à la direction de propagation, intercalé entre deux couches de fibres de la paroi.

Avantageusement, le renfort est réalisé en un matériau ayant un allongement à la rupture supérieur de 50% à celui des fibres des couches.

De préférence, le renfort métallique a des formes lui permettant d'être immobilisé entre les couches de fibres lorsqu'un effort de traction est exercé à l'une de ses extrémités. Cette caractéristique permet aux renforts métalliques de ne pas bouger dans la matrice tout en limitant l'adhérence entre le renfort et les couches adjacentes. Cette caractéristique favorise la déviation de la crique qui tend à se propager selon la direction du renfort 20.

D'autres caractéristiques et avantages ressortiront de la description qui va suivre de l'invention, description donnée à titre d'exemple uniquement, en regard des dessins annexés sur lesquels :
- la figure 1 est une coupe selon un plan transversal d'un panneau pour le traitement acoustique,
- la figure 2 est un schéma illustrant une plaque en matériau composite de référence,
- la figure 3A est un schéma illustrant une plaque en matériau composite renforcée avec des plis de fibres supplémentaires dans laquelle s'est propagée une crique,
- la figure 3B est un schéma illustrant une plaque en matériau composite renforcée avec des renforts sous forme de bande en Kevlar dans laquelle s'est propagée une crique,
- la figure 3C est un schéma illustrant une plaque en matériau composite renforcée avec des renforts métalliques selon l'invention qui ont permis de dévier la propagation d'une crique,
- la figure 4 représente des courbes d'essais de traction sur des plaques selon une direction parallèle aux renforts respectivement sans renfort, avec des plis supplémentaires, avec des renforts en Kevlar et avec des renforts métalliques,
- la figure 5 représente des courbes d'essais de traction sur des plaques selon une direction perpendiculaire aux plaques respectivement sans renfort, avec des plis supplémentaires, avec des renforts en Kevlar et avec des renforts métalliques,
- les figures 6A à 6G sont des vues latérales de renforts selon différentes variantes de l'invention,
- la figure 7 est une coupe du renfort illustré sur la figure 6B selon la ligne de coupe VII-VII,
- la figure 8 est une représentation en perspective d'un panneau pour le traitement acoustique d'une entrée d'air d'une nacelle d'aéronef illustrant l'implantation des renforts,
- la figure 9 est une coupe transversale du panneau de la figure 8, et
- la figure 10 est une coupe transversale d'une paroi selon l'invention.

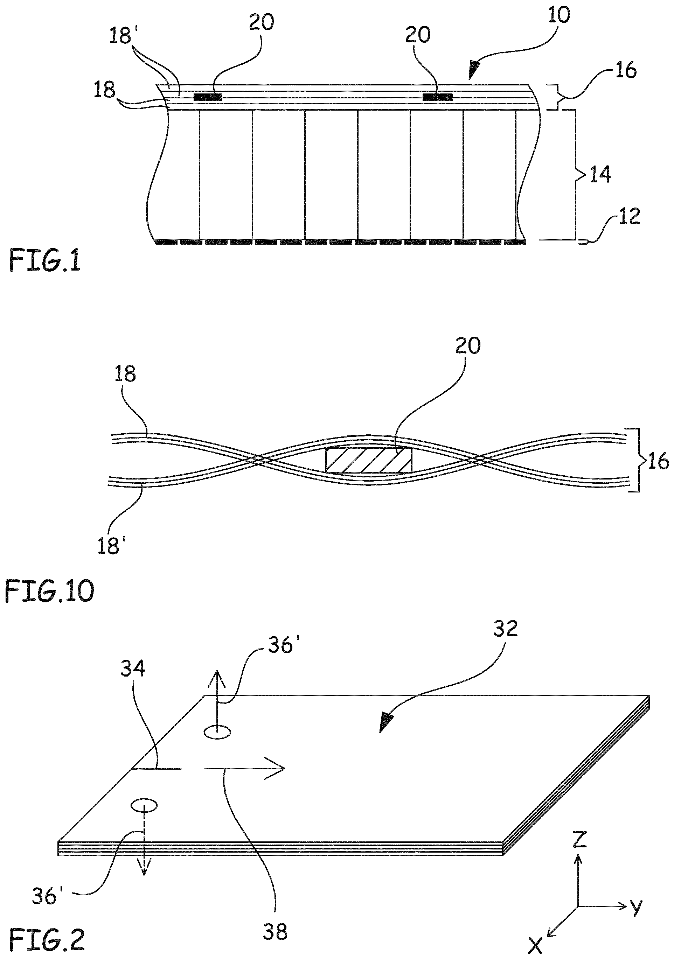

Sur la figure 1, on a représenté un panneau pour le traitement acoustique 10 comportant de l'extérieur vers l'intérieur une couche poreuse acoustiquement résistive 12, au moins une structure alvéolaire 14 et une paroi réflectrice ou imperméable 16.

La couche acoustiquement résistive 12 et la structure alvéolaire 14 ne sont pas plus décrites car elles sont connues de l'homme de métier et peuvent être réalisées de la même manière que celles des panneaux pour le traitement acoustique selon l'art antérieur.

La couche acoustiquement résistive 12 et la structure alvéolaire 14 peuvent être en matériau composite.

La paroi réflectrice 16 est en matériau composite. Elle comprend au moins deux couches de fibres 18, 18' orientées parallèlement au plan du panneau et noyées dans une matrice en résine.

Selon un mode de réalisation, la paroi réflectrice 16 comprend au moins deux couches de fibres 18, 18' tissées ou non tissées, pré-imprégnées ou non, les couches étant drapées les unes sur les autres. La paroi peut comprendre plus de deux couches de fibres. Comme illustré sur la figure 10, les couches 18, 18' peuvent se croiser ou être entrelacées.

Selon un mode de réalisation, ces fibres peuvent être en carbone. A titre d'exemple, pour donner un ordre de grandeur, les fibres de carbone ont un diamètre compris entre 0,005 mm et 0,015 mm soit une section inférieure à 0,0002 mm².

L'invention est applicable à tout type de fibres : fibres courtes ou fibres longues.

Cette paroi 16 est susceptible d'être soumise à des contraintes susceptibles de faire apparaitre une crique également appelée fissure.

Par crique, on entend la rupture d'au moins un pli. Elle est appelée crique traversante lorsqu'elle traverse de manière droite ou oblique la totalité de l'épaisseur.

Compte tenu des contraintes, une crique peut se propager selon une direction appelée direction de propagation.

Selon l'invention, la paroi 16 comprend au moins un renfort métallique 20, longiligne, disposé de manière sécante à la direction de propagation de la crique et intercalé entre deux couches de fibres 18, 18'. Le ou les renforts 20 peuvent être disposés entre des couches parallèles entre elles comme illustré sur la figure 1 ou intercalés entre des couches qui se croisent et qui passent pardessus/par-dessous les renforts, comme illustré sur la figure 10.

Le renfort est métallique en raison des propriétés ductiles des métaux qui peuvent plus se déformer avant de se rompre que des fibres. Ainsi, le matériau utilisé pour le renfort doit avoir un allongement à la rupture supérieur de 50% à celui des fibres.

Par métal, on englobe aussi les alliages métalliques et les nanotechnologies à matrice métallique.

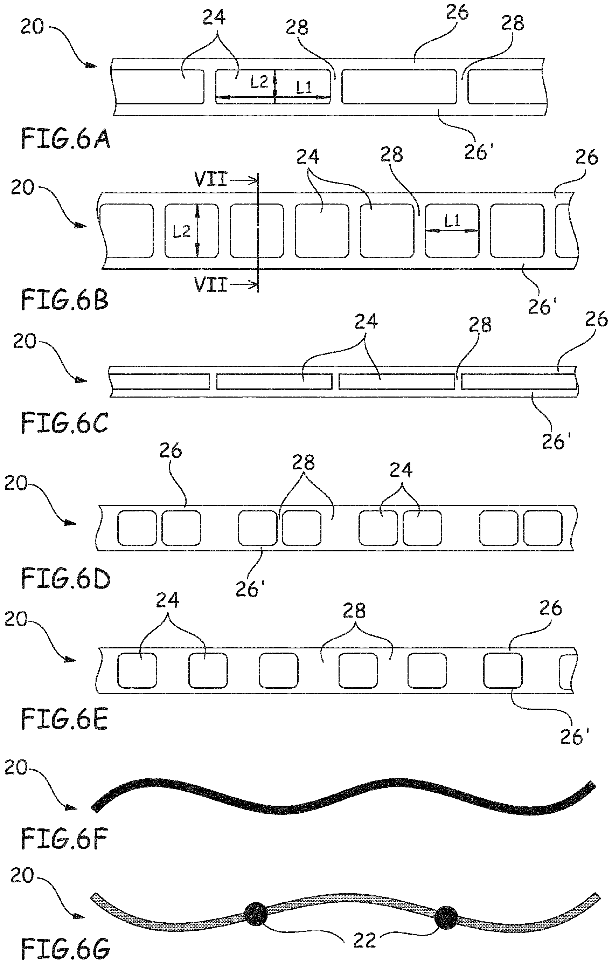

Par longiligne, on entend que le renfort a une dimension nettement plus grande que les autres dimensions. Comme illustré sur les figures 6F et 6G, le renfort n'est pas forcément rectiligne mais peut avoir un profil courbe comme par exemple des ondulations.

Pour la suite de la description, on entend par direction longitudinale X la direction correspondant à la plus grande dimension du renfort, à savoir sa longueur.

Lorsque le renfort n'est pas rectiligne, la direction longitudinale en un point donné correspond à la direction de la tangente au renfort au point donné.

Par plan transversal, on entend un plan perpendiculaire à la direction longitudinale.

Selon un point important de l'invention, le renfort métallique 20 doit avoir des formes lui permettant d'être immobilisé entre les couches de fibres 18, 18' lorsqu'un effort de traction est exercé à l'une de ses extrémités et de ne pas se déchausser.

A cet effet, comme illustré sur les figures 6A à 6E, le renfort 20 n'a pas une section constante, cette dernière variant selon la direction longitudinale.

En variante, comme illustré sur les figures 6F et 6G, le renfort 20 a un profil non rectiligne selon la direction longitudinale mais décrit par exemple des ondulations.

En variante, comme illustré sur la figure 6G, le renfort 20 comprend des points de fixation 22 pour le relier à au moins une des couches 18, 18' adjacentes.

Le fait que le renfort métallique 20 a des formes lui permettant d'être immobilisé entre les couches de fibres 18, 18' lorsqu'un effort de traction est exercé à l'une de ses extrémités, permet de limiter l'adhérence entre le renfort 20 et les couches 18, 18' adjacentes. De manière optimale, la surface extérieure du renfort 20 n'adhère pas aux couches 18, 18' adjacentes. Cette caractéristique favorise la déviation de la crique qui tend à se propager selon la direction du renfort 20.

Selon l'invention, les couches de fibres 18, 18' de part et d'autre du renfort métallique 20 sont liées en dehors des surfaces recouvertes par le renfort. Ainsi, la matrice dans laquelle sont noyées les fibres des couches et le ou les renforts métallique(s) est continue de part et d'autre du ou des renfort(s) 20 et polymérisée lors d'une même phase de polymérisation. La paroi ne comprend pas de part et d'autre du plan du ou des renfort(s) deux matrices distinctes assemblées.

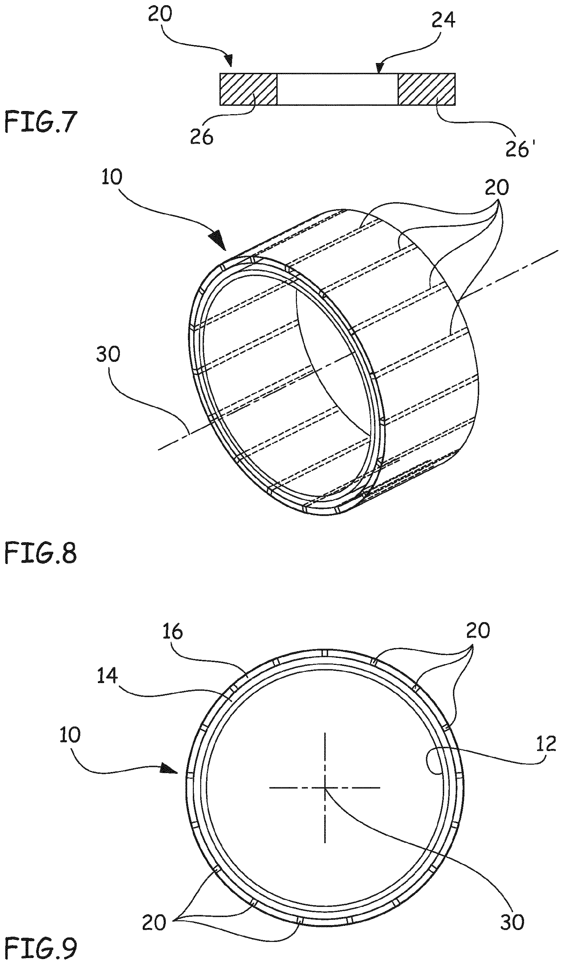

Avantageusement, le renfort 20 se présente sous la forme d'une bande, comme illustré sur les figures 6A à 6E et 7. Cette caractéristique permet à section constante pour le renfort d'avoir une épaisseur réduite pour un renfort en forme de bande par rapport à un renfort en forme de tige cylindrique. Il est possible de prévoir une bande avec une épaisseur de 0,5 mm et une largeur de l'ordre de 0,7 mm, ce qui correspond à une section de 0,35 mm². Pour obtenir la même section, un renfort cylindrique doit avoir un diamètre de l'ordre de 0,65 mm. Le fait de prévoir un renfort sous forme de bande permet de limiter les surépaisseurs et donc les risques de casser les fibres des couches adjacentes. Selon un autre avantage, le fait de prévoir un renfort sous forme d'une bande permet de limiter les risques de cisaillement des fibres par rapport à un renfort avec une section circulaire qui peut se comporter comme un fil à découper. Selon un mode de réalisation préféré illustré sur les figures 6A et 6E, le renfort 20 se présente sous la forme d'une bande de métal avec des évidements 24 avec une largeur inférieure à celle du renfort et disposés de manière symétrique par rapport à l'axe médian longitudinal de la bande. Ces évidements définissent au niveau de la bande deux montants 26, 26' disposés au niveau des bords longitudinaux de la bande (parallèles à la direction longitudinale), reliés par des traverses 28. Au niveau des évidements, les couches 18 et 18' adjacentes sont noyées dans la même matrice.

Pour donner un ordre de grandeur, un renfort a une largeur de l'ordre de 30 mm, comme illustré sur les figures 6A et 6B, de l'ordre de 20 mm comme illustré sur les figures 6D et 6E ou de l'ordre de de 10 mm comme illustré sur la figure 6C.

Les montants 26, 26' peuvent avoir la même largeur ou non. La largeur des montants peut varier de 2 à 10 mm.

Les évidements 24 peuvent être régulièrement espacés comme illustré sur les figures 6A à 6C et 6E, ou avoir entre eux des espacements différents comme illustré sur la figure 6D.

Les évidements 24 peuvent avoir une dimension L1 selon la direction longitudinale identique à ou au plus égale à 2 fois la dimension L2 selon la direction transversale comme illustré sur les figures 6B, 6D, 6E.

En variante, comme illustré sur les figures 6A et 6C, la dimension L1 des évidements est supérieure ou égale à 2 fois la dimension L2.

Enfin, les montants 26, 26' et les traverses 28 peuvent avoir des largeurs sensiblement identiques comme illustré sur les figures 6A à 6C, ou certaines traverses 28 ont une largeur nettement supérieure à celle des montants comme illustré sur les figures 6D et 6E.

Selon un mode de réalisation préféré, un renfort 20 métallique a une largeur de l'ordre de 30 mm, une épaisseur de l'ordre de 0,5 mm, les montants et les traverses ont une largeur de l'ordre de 2 à 4 mm, les évidements sont régulièrement espacés et ont une dimension L1 de 30 à 35 mm et une dimension L2 de l'ordre de 25 mm.

Comme illustré sur les figures 8 et 9, dans le cas d'une paroi réflectrice 16 d'un panneau pour le traitement acoustique 10 en forme de portion d'un tube avec un axe 30, il convient de prévoir des renforts 20 orientés parallèlement à l'axe 30, répartis sur la circonférence, de préférence de manière régulière. Avantageusement, dans le cas d'une paroi cylindrique d'une entrée d'air, il convient de prévoir 12 à 35 renforts répartis de manière régulière sur la périphérie qui forment entre eux un angle variant de 10 à 30° approximativement. Avantageusement, il convient de prévoir 16 à 18 renforts. Dans le cas d'une paroi d'un fuselage pressurisé, il convient non seulement de limiter la propagation d'une crique, mais aussi d'assurer l'étanchéité de la paroi. Dans ce cas, les renforts sont disposés de manière plus rapprochée et forment entre eux un angle variant de 2 à 10° approximativement.

De manière plus générale, dans le cas d'une paroi en matériau composite d'un aéronef ayant des sections dans des plans parallèles avec un pourtour fermé, comme par exemple le fuselage ou une aile, les renforts sont disposés entre les couches de la paroi et orientés selon une direction perpendiculaire aux plans de section.

Lorsqu'ils sont intégrés dans une paroi dans laquelle peut se propager une crique selon une direction de propagation, les renforts 20 sont espacés d'une distance supérieure ou égale à 5 fois la largeur du renfort selon la direction de propagation. De préférence, ils sont orientés perpendiculairement à la direction de propagation qui doit être évitée en priorité.

Sur la figure 2, on a représenté une éprouvette 32 sous forme d'une plaque en matériau composite, comprenant au moins deux couches de fibres.

Cette éprouvette 32 comprend une crique 34 et est soumise à des efforts de traction 36, 36' disposés de part et d'autre de la crique 34 orientés en sens opposés, selon une direction perpendiculaire Z au plan de l'éprouvette, de manière à provoquer la propagation de la crique 34 selon une direction Y matérialisée par la flèche 38.

L'éprouvette 32 de référence ne comprend aucun renfort et comprend une superposition de plis, par exemple 7 plis, certains plis ayant des fibres orientées selon la direction longitudinale, d'autres des fibres orientées à +ou- 45° par rapport à la direction longitudinale. Selon un mode de réalisation, les fibres sont en carbone et noyées dans une résine époxy.

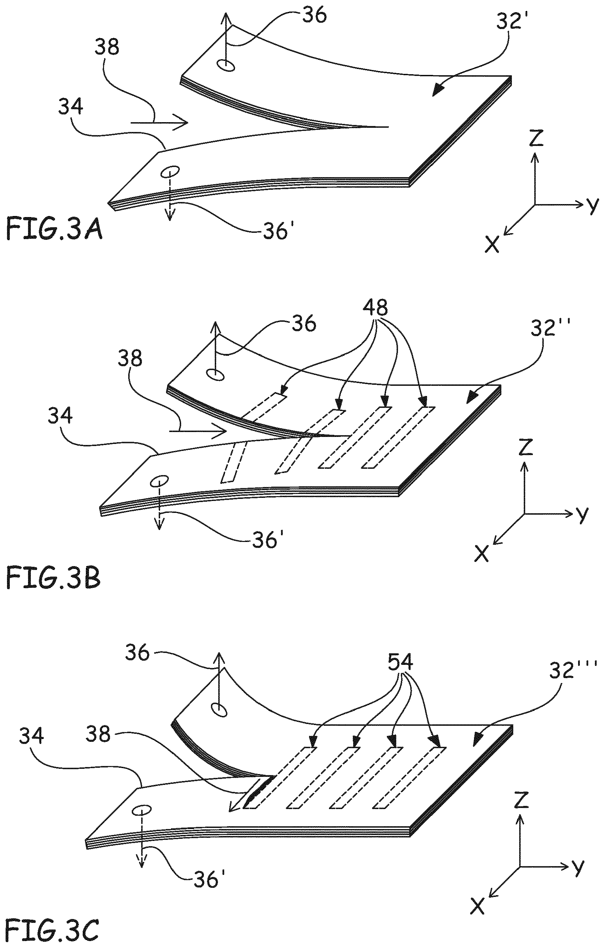

Sur la figure 3A, l'éprouvette 32' a été renforcée par l'ajout de plis de même nature. Ainsi, l'éprouvette 32' comprend 20% de plis supplémentaires, ce qui se traduit par une augmentation de 20% de la masse de l'éprouvette.

L'éprouvette 32' est soumise aux mêmes contraintes que l'éprouvette 32. Comme illustré sur la figure 3A, la crique tend à se propager selon la direction de propagation.

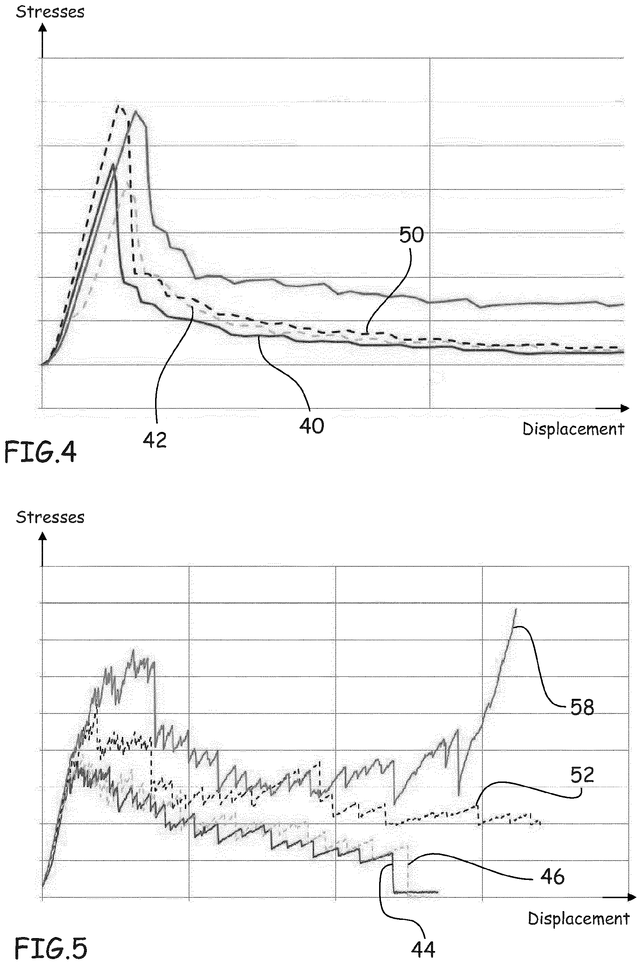

Comme le montrent les courbes de la figure 4, le gain en traction selon la direction longitudinale X est de 15% entre la courbe 40 qui correspond à l'éprouvette de référence 32 et la courbe 42 qui correspond à l'éprouvette 32'. Comme illustré sur la figure 5, le gain en traction selon la direction perpendiculaire Z est de 2% entre la courbe 44 qui correspond à l'éprouvette 32 et la courbe 46 qui correspond à l'éprouvette 32'.

Ainsi, malgré une augmentation de 20% en masse, on n'obtient qu'un gain de 2% concernant la limitation de la propagation de la crique qui se propage de manière identique à celle de l'éprouvette 32 sans renfort.

Sur la figure 3B, l'éprouvette 32" a été renforcée par l'ajout de renforts 48 sous forme de bandes en Kevlar. Ainsi l'éprouvette 32" a une masse supérieure de 5% par rapport à l'éprouvette de référence 32. Comme illustré sur la figure 3B, la crique tend à se propager selon la direction de propagation Y.

Comme le montrent les courbes de la figure 4, le gain en traction selon la direction longitudinale X est de 15% entre la courbe 40 qui correspond à l'éprouvette de référence 32 et la courbe 50 qui correspond à l'éprouvette 32". Comme illustré sur la figure 5, le gain en traction selon la direction perpendiculaire Z est de 50% entre la courbe 44 qui correspond à l'éprouvette 32 et la courbe 52 qui correspond à l'éprouvette 32".

Sur la figure 3C, l'éprouvette 32"' a été renforcée par l'ajout de renforts 54 métalliques selon l'invention, espacés selon la direction de propagation Y. L'éprouvette 32'" a une masse supérieure de 2% par rapport à l'éprouvette de référence 32. Comme illustré sur la figure 3C, la crique tend à se propager selon la direction de propagation Y jusqu'au renfort puis est déviée et tend à se propager selon la direction longitudinale X.

Comme le montrent les courbes de la figure 4, le gain en traction selon la direction longitudinale X est de 30% entre la courbe 40 qui correspond à l'éprouvette de référence 32 et la courbe 56 qui correspond à l'éprouvette 32"'. Comme illustré sur la figure 5, le gain en traction selon la direction perpendiculaire Z est de 120% entre la courbe 44 qui correspond à l'éprouvette 32 et la courbe 58 qui correspond à l'éprouvette 32"'.

Ainsi, comme le montre cet essai, la crique ne se propage pas selon la direction de propagation mais est déviée grâce aux renforts selon l'invention. De plus, on note pour l'éprouvette avec des renforts métalliques selon l'invention un gain très nettement supérieur par rapport aux autres éprouvettes avec un impact plus limité sur la masse. Les essais tendent à vaincre un préjugé de l'homme du métier qui tend à penser qu'à iso-masse, les matériaux composites ont des caractéristiques mécaniques supérieures aux métaux si bien que les éléments métalliques d'un aéronef sont remplacées par des éléments en matériau composite.

## Revendications

1. Paroi en matériau composite comprenant au moins deux couches de fibres (18, 18') noyées dans une matrice en résine, une crique étant susceptible de se propager dans ladite paroi selon une direction de propagation, **caractérisée en ce qu'**elle comprend au moins un renfort (20) métallique ayant des propriétés ductiles de manière à pouvoir se déformer sans se rompre, longiligne, orienté selon une direction sécante à la direction de propagation, intercalé entre deux couches de fibres (18, 18') de la paroi.

2. Paroi en matériau composite selon la revendication 1, **caractérisée en ce que** le renfort est réalisé en un matériau ayant un allongement à la rupture supérieur de 50% à celui des fibres des couches.

3. Paroi en matériau composite selon la revendication 2, **caractérisée en ce que** le renfort métallique (20) a des formes lui permettant d'être immobilisé entre les couches de fibres (18, 18') lorsqu'un effort de traction est exercé à l'une de ses extrémités.

4. Paroi en matériau composite selon la revendication 3, **caractérisée en ce que** le renfort (20) a une section qui varie sur sa longueur.

5. Paroi en matériau composite selon l'une quelconque des revendications précédentes, **caractérisée en ce que** le renfort (20) se présente sous la forme d'une bande intercalée entre les couches de fibres (18, 18').

6. Paroi en matériau composite selon la revendication 5, **caractérisée en ce que** le renfort (20) se présente sous la forme d'une bande de métal avec des évidements (24) avec une largeur inférieure à celle du renfort et disposés de manière symétrique par rapport à l'axe médian longitudinal du renfort.

7. Paroi en matériau composite selon la revendication 6, **caractérisée en ce que** le renfort a une largeur de l'ordre de 30 mm.

8. Paroi en matériau composite selon la revendication 6 ou 7, **caractérisée en ce que** le renfort a une épaisseur de l'ordre de 0,5 mm.

9. Paroi en matériau composite selon l'une quelconque des revendications 6 à 8, **caractérisée en ce que** les évidements (24) sont régulièrement espacés de l'ordre de 2 à 4 mm et ont une dimension selon la longueur du renfort de 30 à 35 mm et une dimension selon la largeur du renfort de l'ordre de 25 mm.

10. Paroi en matériau composite selon l'une quelconque des revendications précédentes, **caractérisé en ce qu'**elle comprend plusieurs renforts (20) espacés d'une distance supérieure ou égale à 5 fois la largeur des renforts selon la direction de propagation.

11. Paroi en matériau composite selon l'une quelconque des revendications précédentes, **caractérisé en ce que** ladite paroi a des sections selon des plans parallèles décrivant un pourtour fermé et **en ce qu'**elle comprend des renforts répartis de manière régulière sur la périphérie du pourtour fermé qui forment entre eux un angle variant de 10 à 30° approximativement.

12. Paroi en matériau composite selon l'une quelconque des revendications 1 à 10, **caractérisé en ce que** ladite paroi a des sections selon des plans parallèles décrivant un pourtour fermé et **en ce qu'**elle comprend des renforts répartis de manière régulière sur la périphérie du pourtour fermé qui forment entre eux un angle variant de 2 à 10° approximativement.

## Patentansprüche

1. Wand aus Verbundwerkstoff mit wenigstens zwei Schichten mit in einer Harzmatrix getränkten Fasern (18, 18'), wobei ein Riss in der Lage ist, sich in der Wand entlang einer Ausbreitungsrichtung auszubreiten, **dadurch gekennzeichnet, dass** diese wenigstens eine langgestreckte metallische Verstärkung (20) aufweist, die duktile Eigenschaften hat, um sich auf diese Weise bruchfrei verformen zu können, und die in eine sich mit der Ausbreitungsrichtung schneidende Richtung ausgerichtet ist und zwischen zwei Schichten der Fasern (18, 18') der Wand eingebracht ist.

2. Wand aus Verbundwerkstoff nach Anspruch 1, **dadurch gekennzeichnet, dass** die Verstärkung aus einem Material hergestellt ist, das eine Bruchdehnung hat, die um 50% größer als diejenige der Fasern der Schichten ist.

3. Wand aus Verbundwerkstoff nach Anspruch 2, **dadurch gekennzeichnet, dass** die metallische Verstärkung (20) Formen aufweist, die ihr gestatten, zwischen den Schichten der Fasern (18, 18') festgelegt zu werden, wenn eine Zugbelastung auf eine ihrer Enden ausgeübt wird.

4. Wand aus Verbundwerkstoff nach Anspruch 3, **dadurch gekennzeichnet, dass** die Verstärkung (20) einen Querschnitt aufweist, der entlang ihrer Länge variiert.

5. Wand aus Verbundwerkstoff nach einem der vorhergehenden Ansprüche, **dadurch gekennzeichnet, dass** die Verstärkung (20) als Band ausgestaltet ist, das zwischen die Schichten der Fasern (18, 18') eingebracht ist.

6. Wand aus Verbundwerkstoff nach Anspruch 5, **dadurch gekennzeichnet, dass** die Verstärkung (20) als Metallband mit Ausnehmungen (24) ausgebildet ist, deren Breite kleiner als diejenige des Bands ist und die bezüglich einer mittleren Längsachse der Verstärkung symmetrisch angeordnet sind.

7. Wand aus Verbundwerkstoff nach Anspruch 6, **dadurch gekennzeichnet, dass** die Verstärkung eine Breite in der Größenordnung von 30 mm hat.

8. Wand aus Verbundwerkstoff nach Anspruch 6 oder 7, **dadurch gekennzeichnet, dass** die Verstärkung eine Dicke in der Größenordnung von 0,5 mm hat.

9. Wand aus Verbundwerkstoff nach einem der Ansprüche 6 bis 8, **dadurch gekennzeichnet, dass** die Ausnehmungen (24) in einem regelmäßigen Abstand in der Größenordnung von 2 bis 4 mm angeordnet sind und in Längsrichtung der Verstärkung eine Abmessung von 30 bis 35 mm und in Richtung der Breite der Verstärkung eine Abmessung in der Größenordnung von 25 mm haben.

10. Wand aus Verbundwerkstoff nach einem der vorhergehenden Ansprüche, **dadurch gekennzeichnet, dass** diese mehrere Verstärkungen (20) aufweist, die in einem Abstand angeordnet sind, der größer gleich dem Fünffachen der Breite der Verstärkungen in die Ausbreitungsrichtung ist.

11. Wand aus Verbundwerkstoff nach einem der vorhergehenden Ansprüche, **dadurch gekennzeichnet, dass** die Wand entlang parallelen Ebenen Abschnitte hat, die eine geschlossene Außenlinie beschreiben, und dass diese gleichmäßig um den Umfang der Außenlinie verteilte Verstärkungen aufweist, die untereinander einen Winkel bilden, der ungefähr zwischen 10 bis 30° variiert.

12. Wand aus Verbundwerkstoff nach einem der Ansprüche 1 bis 10, **dadurch gekennzeichnet, dass** die Wand entlang parallelen Ebenen Abschnitte aufweist, die eine geschlossene Außenlinie beschreiben und dass diese Verstärkungen aufweist, die auf gleichmäßige Weise über den Umfang der geschlossenen Außenlinie verteilt sind und die untereinander einen Winkel bilden, der ungefähr zwischen 2 bis 10° variiert.

## Claims

1. A wall made from a composite material comprising at least two layers of fibers (18, 18') embedded in a resin matrix, a crack being able to spread in said wall in a direction of propagation, **characterized in that** it comprises at least one metal reinforcement (20), having ductile properties so as to be able to deform without breaking, longilineal, oriented in a direction secant to the direction of propagation, inserted between two layers of fibers (18, 18') of the wall.

2. The wall made from a composite material according to claim 1, **characterized in that** the reinforcement is made from a material having an elongation at break 50% higher than that of the fibers of the layers.

3. The wall made from a composite material according to claim 2, **characterized in that** the metal reinforcement (20) assumes forms allowing it to be immobilized between the layers of fibers (18, 18') when a tensile force is exerted at one of its ends.

4. The wall made from a composite material according to claim 3, **characterized in that** the section of the reinforcement (20) varies over its length.

5. The wall made from a composite material according to any one of the preceding claims, **characterized in that** the reinforcement (20) assumes the form of a strip inserted between the layers of fibers (18, 18').

6. The wall made from a composite material according to claim 5, **characterized in that** the reinforcement (20) assumes the form of a metal strip with recesses (24) with a width smaller than that of the reinforcement and arranged symmetrically relative to the longitudinal median axis of the reinforcement.

7. The wall made from a composite material according to claim 6, **characterized in that** the reinforcement has a width in the vicinity of 30 mm.

8. The wall made from a composite material according to claim 6 or 7, **characterized in that** the reinforcement has a thickness in the vicinity of 0.5 mm.

9. The wall made from a composite material according to any one of claims 6 to 8, **characterized in that** the recesses (24) are regularly spaced apart by approximately 2 to 4 mm and have a direction along the length of the reinforcement of 30 to 35 mm and a dimension along the width of the reinforcement of approximately 25 mm.

10. The wall made from a composite material according to any one of the preceding claims, **characterized in that** it comprises several reinforcements (20) spaced apart by a distance greater than or equal to 5 times the width of the reinforcements in the direction of propagation.

11. The wall made from a composite material according to any one of the preceding claims, **characterized in that** said wall has sections in parallel planes describing a closed perimeter and **in that** it comprises reinforcements regularly distributed over the periphery of the closed perimeter that form an angle varying from approximately 10 to 30° between them.

12. The wall made from a composite material according to any one of claims 1 to 10, **characterized in that** said wall has sections in parallel planes describing a closed perimeter and **in that** it comprises reinforcements regularly distributed over the periphery of the closed perimeter that form an angle varying from approximately 2 to 10° between them.
